# EUROPEAN PATENT SPECIFICATION

(11) **EP 4 603 800 B1**
(45) Date of publication and mention of the grant of the patent: **28.10.2026**
(21) Application number: 25152541.6
(22) Date of filing: 17.01.2025
(51) Int. Cl.: G01D 5/14

(54) **NON-CONTACT SMART SHIFTER**
KONTAKTLOSER INTELLIGENTER SCHALTHEBEL
DISPOSITIF DE DÉCALAGE INTELLIGENT SANS CONTACT

(30) Priority: 16.02.2024 IN 202411010937
(43) Date of publication of application: 20.08.2025
(73) Proprietor: HONEYWELL INTERNATIONAL INC., Charlotte, NC 28202 (US)
(72) Inventor: RAO, Sharath, Charlotte, 28202 (US); SANCHIHAR, Paresh, Charlotte, 28202 (US); MOHAPATRA, Bibhabasu, Charlotte, 28202 (US); NARAYANA, Raghavendra Gowdagere, Charlotte, 28202 (US); RAMADASU, Bharath, Charlotte, 28202 (US)
(74) Representative: Haseltine Lake Kempner LLP

(56) References cited:
- EP-B1- 2 345 054
- CN-A- 116 929 792
- DE-A1- 10 206 543
- DE-B4- 10 304 804
- US-A- 5 259 262
- US-A1- 2002 124 663
- US-A1- 2017 199 058

## Description

### FIELD OF THE INVENTION

Various embodiments described herein relate generally to a shifter, and more particularly to a non-contact smart shifter.

### BACKGROUND

Shifters are often desirable for use in vehicles to allow an end user to control some vehicle functionality such as movement, turn signals, headlights, washing, horns, and/or the like. Applicant has identified many technical challenges and difficulties associated with durability, weight, and ease of use with such shifters. Through applied effort, ingenuity, and innovation, many of these identified problems have been solved by developing solutions that are included in embodiments of the present disclosure, many examples of which are described in detail herein.

US 2002/124663 A1 discloses a rotary encoder.

### BRIEF SUMMARY

In one or more embodiments, a smart shifter is provided. In some embodiments, the smart shifter includes a spiral magnet. In some embodiments, the smart shifter includes a magneto-resistive sensor. In some embodiments, the smart shifter includes an outer housing. In some embodiments, the spiral magnet and the magneto-resistive sensor are spaced apart within the outer housing such that there is no contact between the spiral magnet and the magneto-resistive sensor. In some embodiments, the spiral magnet is configured to rotate with the outer housing. In some embodiments, the magneto-resistive sensor is configured to determine a rotational position of the spiral magnet. In some embodiments, a first function of the smart shifter is determined by the rotational position of the spiral magnet.

In one or more embodiments, the spiral magnet is fixed to the outer housing via one or more indexing plungers and an indexing plunger plate.

In one or more embodiments, the magneto-resistive sensor is part of a printed circuit board assembly configured to implement the first function of the smart shifter.

In one or more embodiments, the spiral magnet includes at least two magnetized pole layers arranged in a spiral pattern.

In one or more embodiments, the spiral magnet defines an opening at a center axis defined by the spiral magnet.

In one or more embodiments, the magneto-resistive sensor is positioned off-axis with respect to the center axis.

In one or more embodiments, the smart shifter includes a second magnet. In some embodiments, the smart shifter includes a three-dimensional integrated circuit. In some embodiments, the second magnet and the three-dimensional integrated circuit are spaced apart such that there is no contact between the second magnet and the three-dimensional integrated circuit. In some embodiments, the second magnet is configured to move across three dimensions. In some embodiments, the three-dimensional integrated circuit is configured to determine an absolute position of the second magnet. In some embodiments, the second function of the smart shifter is determined by the absolute position of the second magnet.

In one or more embodiments, the three-dimensional integrated circuit determines the absolute position of the second magnet based on a flux density.

In one or more embodiments, the second magnet is placed at a first end of a shaft, where a second end of the shaft is coupled to an assembly including the spiral magnet and the magneto-resistive sensor.

In one or more embodiments, the smart shifter further includes a push switch, where the push switch allows movement of the shaft when engaged.

In one or more embodiments, the absolute position of the second magnet describes a linear displacement of the second magnet and a rotary position of the second magnet.

In one or more embodiments, the first function of the smart shifter or the second function of the smart shifter includes at least one of vehicle gear, vehicle speed, vehicle windshield wiper function, headlight function, or turn indicator function.

In one or more embodiments, a method is provided. In some embodiments, the method includes determining, by a magneto-resistive sensor, a rotational position of a spiral magnet, where the spiral magnet and the magneto-resistive sensor are spaced apart within an outer housing such that there is no contact between the spiral magnet and the magneto-resistive sensor, and where the spiral magnet is configured to rotate with the outer housing. In some embodiments, the method includes determining a first function of a smart shifter based on the rotational position of the spiral magnet. In some embodiments, the method includes implementing the first function of the smart shifter.

In one or more embodiments, the spiral magnet is fixed to the outer housing via one or more indexing plungers and an indexing plunger plate.

In one or more embodiments, the magneto-resistive sensor is part of a printed circuit board assembly configured to implement the first function of the smart shifter.

In one or more embodiments, the spiral magnet includes at least two magnetized pole layers arranged in a spiral pattern.

In one or more embodiments, the spiral magnet defines an opening at a center axis defined by the spiral magnet.

In one or more embodiments, the magneto-resistive sensor is positioned off-axis with respect to the center axis.

In one or more embodiments, the method further includes determining, by a three-dimensional integrated circuit, an absolute position of a second magnet, where the second magnet and the three-dimensional integrated circuit are spaced apart such that there is no contact between the second magnet and the three-dimensional integrated circuit, and where the second magnet is configured to move across three dimensions. In some embodiments, the method further includes determining a second function of the smart shifter based on the absolute position of the second magnet. In some embodiments, the method includes implementing the second function of the smart shifter.

In one or more embodiments, the three-dimensional integrated circuit determines the absolute position of the second magnet based on a flux density.

In one or more embodiments, the second magnet is placed at a first end of a shaft, where a second end of the shaft is coupled to an assembly including the spiral magnet and the magneto-resistive sensor.

In one or more embodiments, the smart shifter further includes a push switch, where the push switch allows movement of the shaft when engaged.

In one or more embodiments, the absolute position of the second magnet describes a linear displacement of the second magnet and a rotary position of the second magnet.

In one or more embodiments, the first function of the smart shifter or the second function of the smart shifter includes at least one of vehicle gear, vehicle speed, vehicle windshield wiper function, headlight function, or turn indicator function.

### BRIEF DESCRIPTION OF THE DRAWINGS

Reference will now be made to the accompanying drawings, which are not necessarily drawn to scale, and wherein:
FIG. 1 is a smart shifter including a rotatable component and multi-axis component in accordance with various embodiments of the present disclosure.
FIG. 2A depicts a perspective view of a rotatable component of a smart shifter in accordance with various embodiments of the present disclosure.
FIG. 2B depicts a perspective view of a portion of a rotatable component including a spiral magnet and a magneto-resistive sensor in accordance with various embodiments of the present disclosure.
FIGS. 3A-3B depict a magneto-resistive sensor in accordance with various embodiments of the present disclosure.
FIGS. 3C-3D depict a magneto-resistive sensor interacting with a spiral magnet in accordance with various embodiments of the present disclosure.
FIG. 3E depicts input and output of a magneto-resistive sensor in accordance with various embodiments of the present disclosure.
FIG. 4A depicts a north pole and a south pole of a spiral magnet in accordance with various embodiments of the present disclosure.
FIG. 4B depicts varying sizes and numbers of poles in spiral magnets in accordance with various embodiments of the present disclosure.
FIGS. 5A-5B depict output of a magneto-resistive sensor in accordance with various embodiments of the present disclosure.
FIG. 6A depicts a perspective view of a multi-axis component in accordance with various embodiments of the present disclosure.
FIG. 6B depicts a side view of a multi-axis component in accordance with various embodiments of the present disclosure.
FIGS. 7A-7B depict a magnet moving relative to a three-dimensional integrated circuit in accordance with various embodiments of the present disclosure.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

It should be understood at the outset that although illustrative implementations of one or more aspects are illustrated below, the disclosed systems, and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements are disclosed, the drawings may not be to scale.

The words "example," or "exemplary," when used herein, are intended to mean "serving as an example, instance, or illustration." Any implementation described herein as an "example" or "exemplary embodiment" is not necessarily preferred or advantageous over other implementations.

As used herein, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the terms "coupled," "fixed," "attached to," and the like refer to both direct coupling, fixing, or attaching, as well as indirect coupling, fixing, or attaching through one or more intermediate components or features, unless otherwise specified herein.

As used herein, the term "positioned directly on" refers to a first component being positioned on a second component such that they make contact. Similarly, as used herein, the term "positioned directly between" refers to a first component being positioned between a second component and a third component such that the first component makes contact with both the second component and the third component. In contrast, a first component that is "positioned between" a second component and a third component may or may not have contact with the second component and the third component. Additionally, a first component that is "positioned between" a second component and a third component is positioned such that there may be other intervening components between the second component and the third component other than the first component.

It is desirable, in some examples, to reduce the amount of contact between parts of a shifter. Embodiments of the present disclosure include, but are not limited to, a non-contact smart shifter that is lightweight, durable, and configurable to implement multiple functions of, for example, a vehicle (e.g., a car).

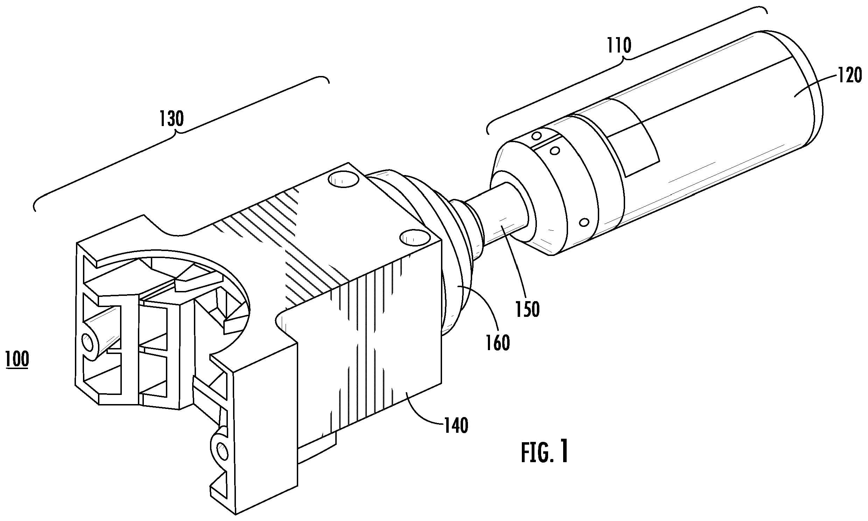

Turning now to FIG. 1, an example smart shifter 100 is depicted. In some embodiments, the smart shifter includes a rotatable component 110 and a multi-axis component 130. The rotatable component 110 may be configured to implement different functionality than the multi-axis component 130. For example, the rotatable component 110 may control windshield wiper functionality (e.g., wiper speed and washing), speed control functionality, horn function, and/or headlight functionality and the multi-axis component 130 may be control speed and/or gear of a vehicle.

In one or more embodiments, rotatable component 110 is cylindrical in shape. For example, rotatable component may be shaped in such a way to be gripped by a hand of an end user. The cylindrical rotatable component 110 may have a length similar to the width of a human hand and a diameter that allows the human hand to comfortably grip the rotatable component 110.

In one or more embodiments, rotatable component 110 includes an outer housing 120. For example, the outer housing 120 may be a shell or casing surrounding internal components of the rotatable component 120. In some examples, the outer housing 120 fully encapsulates the internal components of rotatable component 120. Outer housing 120 may be made from, for example, a plastic or rubber material to ensure end user comfort when gripping the outer housing 120. A user turning the outer housing 120 may initiate functionality such as windshield wiper functionality, turn indicator functionality, headlight functionality, and/or the like.

In one or more embodiments, multi-axis component 130 is connected to rotatable component 110 by a shaft 150. In some examples, shaft 150 extends within a fixed housing 140 of multi-axis component 130. The shaft 150 may be manipulated by a user gripping the rotatable component 110 such that the shaft 150 is moved in a number of directions within fixed housing 140. For example, the shaft 150 may be manipulated up, down, left, right, or rotated by an end user.

In one or more embodiments, fixed housing 140 is fixed and not movable by an end user. This may result from the fixed housing 140 being secured to an interior of a vehicle by, for example, bolts or screws. The fixed housing may be made out of durable material such as plastic or metal (e.g., aluminum).

In some examples, shaft 150 may extend through flexible shell 160 adjacent to fixed housing 140. Flexible shell 160 may be made of flexible material such as rubber or a loose cloth material. In some examples, flexible shell 160 allows shaft 150 to be manipulated and move within it while protecting an opening in fixed housing 140.

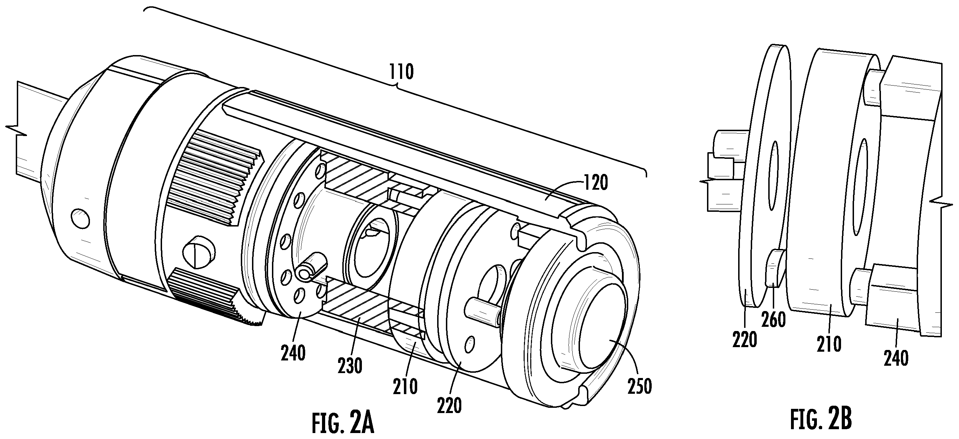

Turning now to FIG. 2A, an example perspective view of a rotatable component 110 is provided. In the depicted example, outer housing 120 surrounds spiral magnet 210, printed circuit board assembly 220, magneto-resistive sensor 260, index plungers 230, and indexing plunger plate 240. In some examples, rotatable component further includes push switch 250.

In one or more embodiments, index plunger plate 240 is fixed to outer housing 120. For example, index plunger plate 240 may be cylindrical or disc shapes such that its sides are fixed to outer housing 120. In some examples, when a user rotates outer housing 120, indexing plunger plate 240 may rotate with the outer housing 120.

In one or more embodiments, indexing plunger plate 240 may be connected to one or more indexing plungers 230. For example, in the depicted embodiment, indexing plungers 230 are placed on opposite sides of indexing plunger plate 240. Indexing plungers 230 may extend from indexing plunger plate 240 along the length of cylindrical component 110. For example, indexing plungers 230 may extend along the outer housing 120. In some examples, the indexing plungers 230 may be coupled to a spiral magnet 210.

In one or more embodiments, spiral magnet 210 is placed within outer housing 120 and fixed to indexing plungers 230. Spiral magnet 210 may have at least two magnetized pole layers arranged in a spiral pattern. For example, the spiral magnet 210 may have at least one north pole and at least one south pole arranged in the spiral formation. In some examples, when a user rotates outer housing 120, the indexing plungers 230 rotate the spiral magnet 210 with the outer housing 120. Rotation of spiral magnet 210 then may cause a change in a magnetic field (e.g., a flux density). In some examples, the spiral magnet 210 defines an opening at a center axis defined by the spiral magnet 210. The center axis may also be defined by the rotatable component 110, indexing plunger plate 240, printed circuit board assembly 220, and/or push switch 250.

In one or more embodiments, printed circuit board assembly 220 is spaced apart from the spiral magnet 210 such that there is no contact between printed circuit board assembly 220 and spiral magnet 210. For example, printed circuit board assembly 220 may be spaced 1-3 millimeters apart from spiral magnet 210 such that a rotational position of spiral magnet 210 may be determined by printed circuit board assembly 220. In some examples, the printed circuit board assembly 220 is a cylindrical or disc shape. The printed circuit board assembly 220 may define an opening at the center axis defined by spiral magnet 220. The printed circuit board assembly 220 may be fixed to a non-rotatable end of the rotatable component 110. For example, the printed circuit board assembly 220 will remain fixed during rotation of spiral magnet 210.

In one or more embodiments, push switch 250 is placed at an end of rotatable component 110. Push switch 250 may be a circular button that may be engaged by an end user. In some examples, end user engagement with push switch 250 may allow the end user to manipulate shaft 150. For example, the end user may move shaft 150 up, down, left, or right while engaging push switch 250. In some examples, this causes the rotatable component 110 to lean at an angle compared to its position prior to the movement of shaft 150.

Turning now to FIG. 2B, an example closeup view of an area between spiral magnet 210 and printed circuit board assembly 220. In one or more embodiments, a printed circuit board assembly including a magneto-resistive sensor 260 is placed on the printed circuit board assembly 220 and is not in contact with spiral magnet 210. The magnetoresistive sensor 260 may stay fixed while the spiral magnet 210 rotates. In some examples, spiral magnet 210 is off-axis from magneto-resistive sensor 260. For example, magnetoresistive sensor 260 may be an angular position sensor for off axis applications. In some examples, the magneto-resistive sensor 260 detects a rotational position of spiral magnet 210. In some examples, magneto-resistive sensor 260 is configured to detect the rotational position of spiral magnet 210 within 0.1 degrees. The magneto-resistive sensor 260 may be able to detect the rotational position of the spiral magnet 210 based on a flux density caused by the spiral magnet or change in a magnetic field.

In some examples, allowing the magneto-resistive sensor 260 to determine the position of the spiral magnet 210 without contact increases the life span of smart shifter 100. In addition, weight of the shifter is reduced by removing excess components. Furthermore, the accuracy of the magneto-resistive sensor's 260 detection of rotational position of spiral magnet 210 allows for high reliability. As a further advantage, self-calibration is possible and different positions may be configured to correspond to different functions.

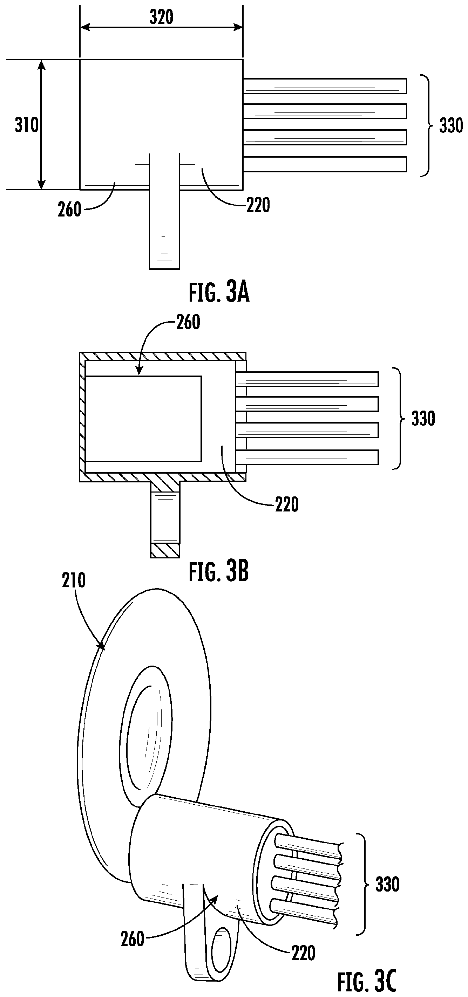

Turning now to FIG. 3A, an example magneto-resistive sensor 260 is provided. In some examples, the magneto-resistive sensor 260 and printed circuit board assembly 220 are contained in a cylinder with an outside diameter 310 of 10mm. In some examples, the cylinder has a length 320 of 10mm. These measurements for the cylinder provide example benefits such as allowing a lighter weight smart shifter with reduced material costs. In some examples, the printed circuit board assembly 220 is connected to a circuitry array 330 which allows functionality to be implemented based on the position of the spiral magnet 210.

Turning now to FIG. 3B, an example cross-section view of magneto-resistive sensor 260 and printed circuit board assembly 220 is illustrated. In some examples, the circuitry array 330 and magneto-resistive sensor 260 are coupled to the printed circuit board assembly 240. The magneto-resistive sensor 260 may be, for example, a TAD2134. In some examples, the magneto-resistive sensor 260 has an accuracy of 0.1 degrees.

Turning now to FIG. 3C, an example perspective view of the magneto-resistive sensor 260 reading the magnetic field of the spiral magnet 210 is illustrated. In one or more embodiments, the magneto-resistive sensor 260 and printed circuit board assembly 220 remains fixed while the spiral magnet 210 is configured to spin or rotate. In some examples, an integrated circuit may be deployed in place of printed circuit board assembly 220. In some examples, the spin or rotation of spiral magnet 210 creates a change in magnetic field or flux density, which is sensed by the magneto-resistive sensor 260. In some examples, the magneto-resistive sensor 260 implements functionality based on the position of the spiral magnet 210 via the circuit array 330.

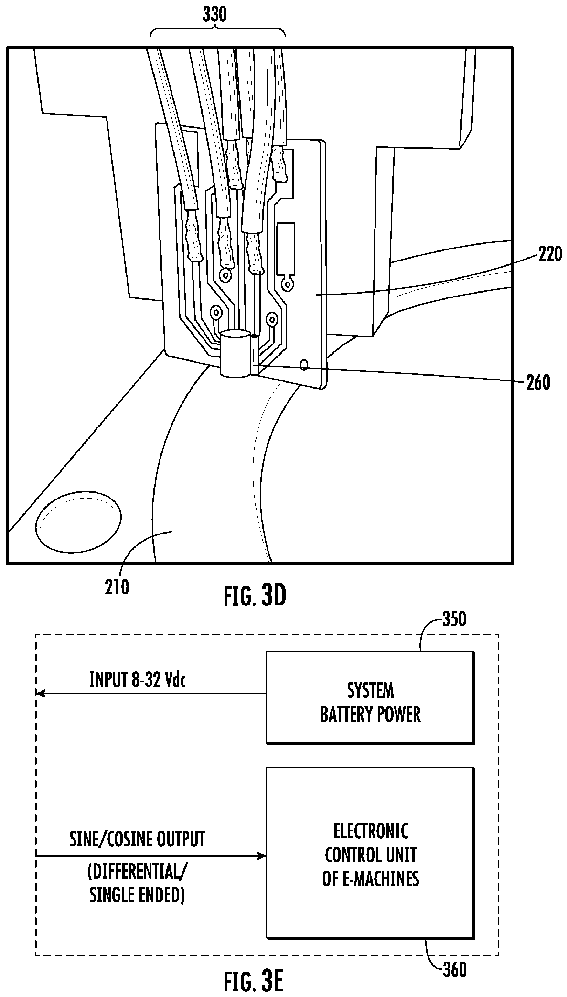

Turning now to FIG. 3D, an illustration of the magneto-resistive sensor placed above a spiral magnet 210 is illustrated. As shown in FIG. 3D, the printed circuit board assembly 220 may be wider than the distance between the edge of spiral magnet 210 and the opening defined by spiral magnet 210. In some examples, the printed circuit board assembly 220 may be perpendicular to the spiral magnet 210. At this example orientation, magnetoresistive sensor 260 remains fixed as the spiral magnet 210 rotates.

Turning now to FIG. 3E, an example input and output of magneto-resistive sensor 260 is illustrated. For example, input and outputs may be communicated via circuitry array 220 and printed circuit board assembly 220.

In one or more embodiments, the magneto-resistive sensor 260 is powered by a battery 350. In some embodiments, the battery 350 applies direct current to the magnetoresistive sensor 260. For example, the battery 350 may apply between 8 volts and 32 volts of direct current to the magneto-resistive sensor 260 in order to provide the correct power for detecting rotational position of spiral magnet 210.

In one or more embodiments, the magneto-resistive sensor 260 outputs to an electronic control unit 360. The electronic control unit 360 may control one or more electrical systems or subsystems in a vehicle, such as a car, truck, boat, plane, train, motorcycle, and/or the like. For example, the electronic control unit 360 may control function of windshield wipers, turn indicators, headlights, gears, and/or the like. In some examples, a sine/cosine output from the magneto-resistive sensor 260 is fed to the electronic control unit 360. The output from the magneto-resistive sensor 360 may be single-ended or differential.

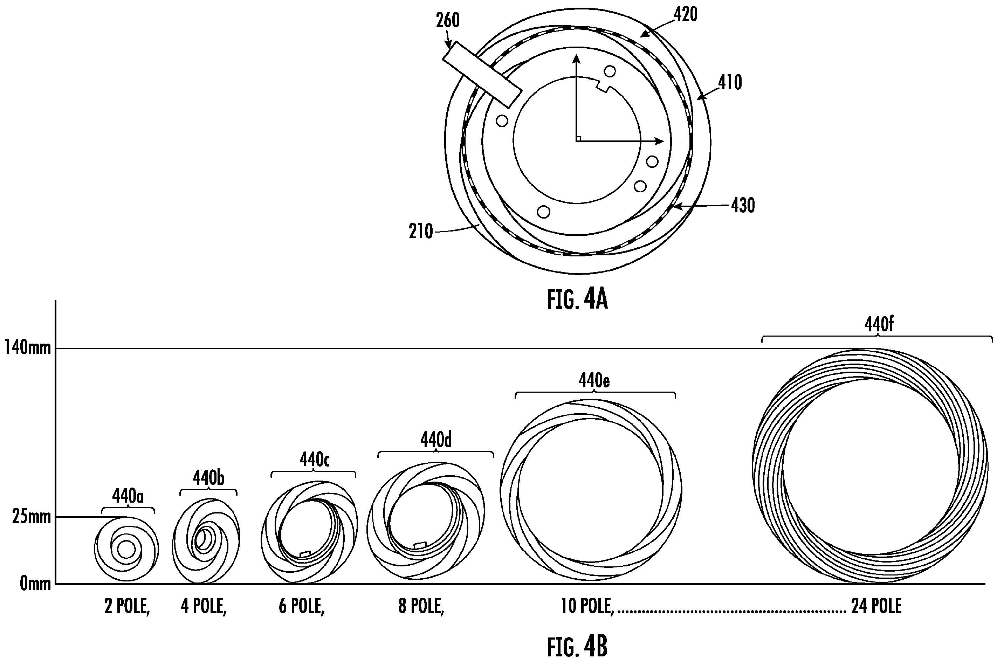

FIG. 4A depicts an example spiral magnet 210 having four poles including a north pole 410 and a south pole 420. In this example spiral magnet 210, there are two north poles 510 and two south poles 420. The north poles 410 and south poles 420 are arranged in a spiral formation. In this example, each pole has an equal width and is tapered off into an infinitesimal slice as it moves along the spiral magnet 210.

In some examples, the magneto-resistive sensor 260 is placed along a center track 430 of the spiral magnet 210. Each of the example north poles 410 and south poles 420 pass through the center track 430. For example, a magneto-resistive sensor 260 may determine the change in magnetic field based on its position along the center track 430. In other embodiments, the magneto-resistive sensor 260 may be placed inside or outside the center track 430.

FIG. 4B depicts example spiral magnet having different pole counts. For example, spiral magnet 440a having two poles (e.g., "two pole" spiral magnet). The spiral magnet 440a has a diameter of 25mm and is formed of adjacent tilted and alternating magnetized north and south poles having the same width being tapered off into infinitesimal slices moving along the spiral magnet 440a. An example spiral magnet 440b is depicted having four poles (e.g., "four pole" spiral magnet). The spiral magnet 440b is formed of adjacent tilted and alternating magnetized north and south poles having the same width being tapered off into infinitesimal slices moving along the spiral magnet 440b. An example spiral magnet 440c is provided having six poles (e.g., "six pole" spiral magnet). The spiral magnet 440c is formed of adjacent tilted and alternating magnetized north and south poles having the same width being tapered off into infinitesimal slices moving along the spiral magnet 440c. An example spiral magnet 440d is depicted having eight poles (e.g., "eight pole" spiral magnet). The spiral magnet 440d is formed of adjacent tilted and alternating magnetized north and south poles having the same width being tapered off into infinitesimal slices moving along the spiral magnet 440d. A spiral magnet 440e is depicted having ten poles (e.g., "ten pole" spiral magnet). The spiral magnet 440e is formed of adjacent tilted and alternating magnetized north and south poles having the same width being tapered off into infinitesimal slices moving along the spiral magnet 440e. An example spiral magnet 440f having twenty-four poles (e.g., "twenty-four pole" spiral magnet). The spiral magnet 440f has a diameter of 140mm and is formed of adjacent tilted and alternating magnetized north and south poles having the same width being tapered off into infinitesimal slices moving along the spiral magnet 440f.

It should be understood that a spiral magnet as described herein is not limited to the pole count configurations of the examples provided in FIGS. 4A-4B. In various embodiments, a spiral magnet may have a pole count that is different from the examples of FIGS. 4A-4B. For example, an example spiral magnet may comprise 7 poles, 9 poles, or the like in some embodiments. As depicted in FIG. 4B, diameters of spiral magnets may vary in size, but may be different sizes from those depicted in other embodiments.

In various embodiments, a spiral magnet may have a spiral in a number of poles (e.g., 2, 6, 8, 24, 36 or the like) for the required angle. In various embodiments, the pole count of a spiral magnet may be based at least in part on the tilt angle of the north and south poles and/or the width of the north and south poles. Additionally and/or alternatively, in various embodiments, the pole count of the spiral magnet may be based at least in part on one or more other parameters (e.g., outer diameter, inner diameter, radial thickness, axial thickness, and/or the like) of the spiral magnet. In various embodiments, the pole pattern is an Archimedean spiral that is generally defined as r = a + b·θ^{(1/c)}, where r is the radius at a given angle θ (e.g., amount of rotation of the radius), a is the starting location of the spiral at the inner diameter, b is the tilt angle, and c describes the growth rate/shape of the radius.

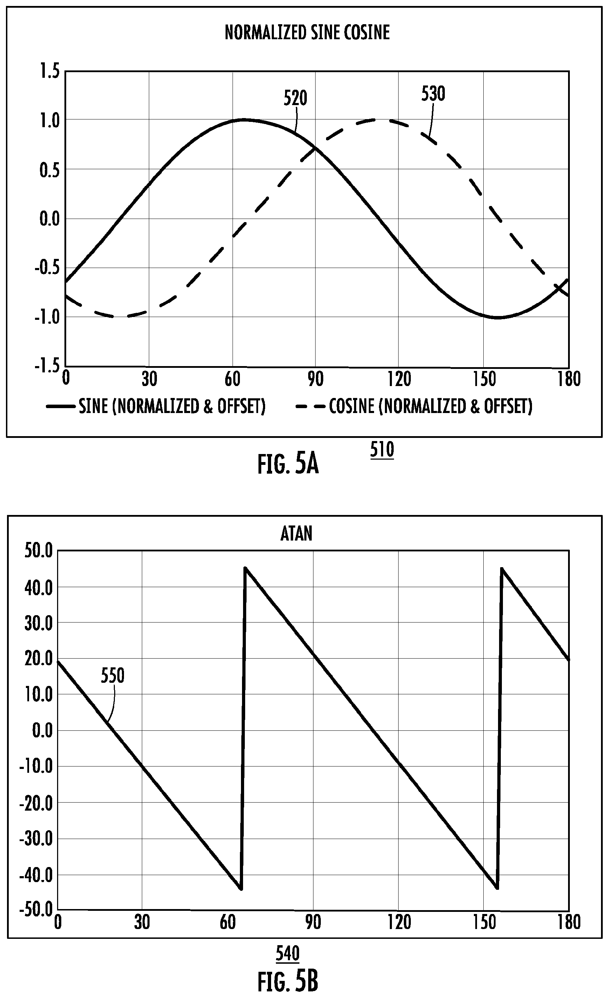

FIG. 5A shows an example graph 510 of sine 520 and cosine 530 output signals corresponding to an output of a magneto-resistive sensor 260 detecting movement of a spiral magnet 210, while FIG. 5B shows an example graph 540 of processed output signal generated 550, utilizing an arctangent function, based at least in part on the sine 520 and cosine 530 output signals of FIG. 5A.

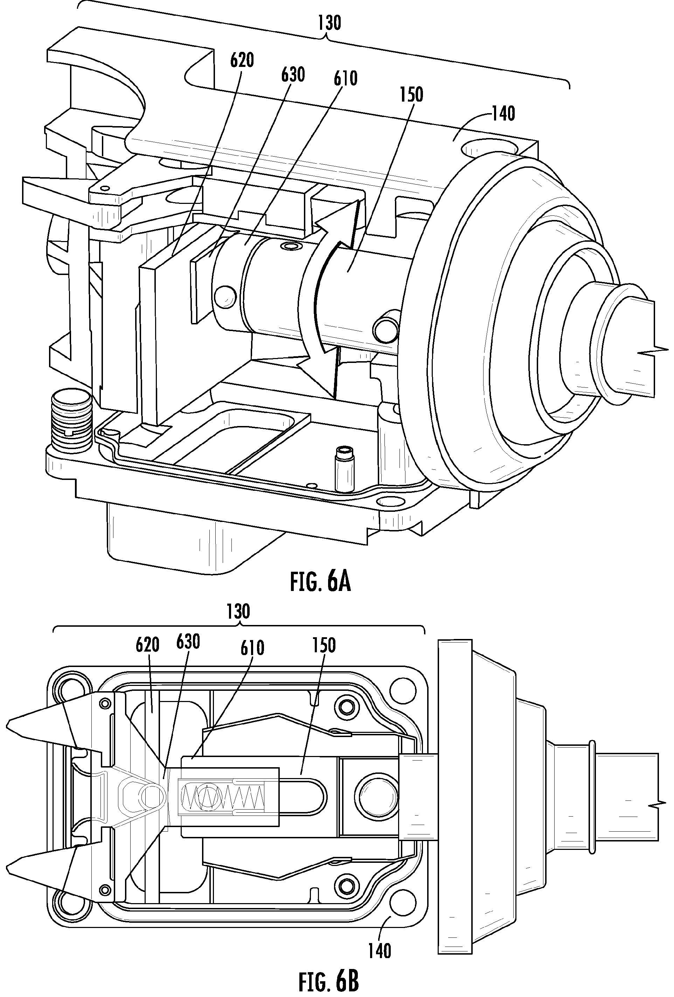

Turning now to FIG. 6A-6B, a multi-axis component 130 of a smart shifter 100 is provided. In one or more embodiments, the fixed housing 140 of the multi-axis component 130 includes shaft 150, second magnet 610, three-dimensional integrated circuit 630, and second printed circuit board assembly 620.

In one or more embodiments, a second magnet 610 is coupled to a first end of shaft 150, wherein the second end of shaft 150 is coupled to an assembly comprising the rotatable component 110. In some examples, the second magnet 610 includes a north pole and a south pole. The second magnet 610 may move with the shaft 150 when the shaft 150 is manipulated by an end user. For example, the second magnet 610 may be rotated or moved up, down, left, or right based on manipulation of shaft 150 by an end user.

In one or more embodiments, a second printed circuit board assembly 620 is secured inside the fixed housing 140 of multi-axis component 130. The example second printed circuit board assembly is placed such that there is a gap between the printed circuit board assembly and the second magnet 610.

In one or more embodiments, a three-dimensional integrated circuit 630 is coupled to the second printed circuit board assembly 620. The example three-dimensional integrated circuit 630 is spaced apart from the second magnet 610 due to being fixed on second printed circuit board assembly 620. Three-dimensional integrated circuit 630 may be automotive grade (e.g., AEC-Q100). In some examples, three-dimensional integrated circuit 630 may be micro-powered with a programmable duty cycle. Some example three-dimensional integrated circuits 630 may have selectable digital output. Three-dimensional integrated circuit 630 may be, for example, 16-bit magnetic, 16-bit supply voltage, or 14-bit temperature. Some example three-dimensional integrated circuits 630 may operate at runtime programmable modes, single measurement, burst mode up to 2kHz, or wake-up on change mode. An example three-dimensional integrated circuit 630 may have a programmable measurement range and/or an extended magnetic sensing range option. In some examples, the three-dimensional integrated circuit 630 may use on-chip magnetic calibration data allowing an off-chip digital signal processor to achieve maximum accuracy.

In some examples, as the shaft 150 changes angle and direction due to user manipulation, second magnet 610 is moved relative to three-dimensional integrated circuit 630. The example three-dimensional integrated circuit 630 is configured to decode an absolute position of the second magnet 610. In some examples, the three-dimensional integrated circuit 630 then sends signals to a processor to activate an intended function based on the absolute position of second magnet 610.

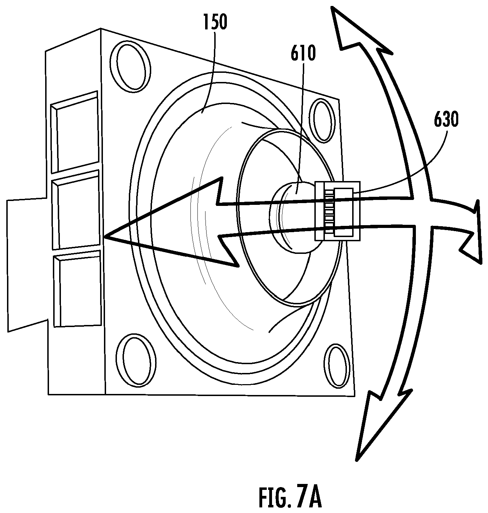

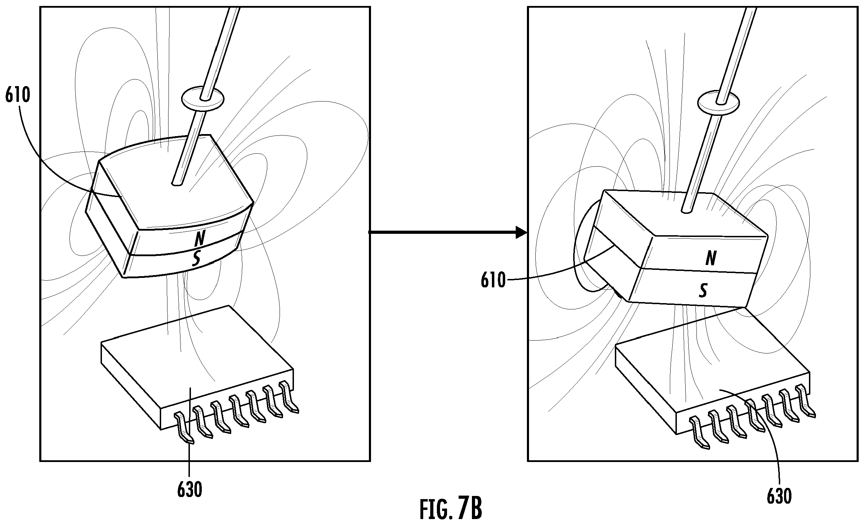

Turning now to FIGS. 7A-7B, example depictions of second magnet 610 moving with respect to three-dimensional integrated circuit 630 are provided. For example, second magnet 610 may move up, down, left, or right (e.g., in x or y directions) with shaft 150. As second magnet 610 moves in these directions, it may additionally move in the z direction and be angled with respect to three-dimensional integrated circuit 630, as shown in FIG. 7B. In further examples, second magnet 610 may rotate with respect to three-dimensional integrated circuit 630.

In some examples, the three-dimensional integrated circuit decodes the absolute position of second magnet 610 based on flux density (e.g., BX, BY, and BZ components of flux density). In some examples, the three-dimensional integrated circuit determines a linear displacement and a rotary position (e.g., between 0 and 360 degrees). Application software may be selected for an external microcontroller such that different positions of second magnet 610 result in different functionality. For example, different positions of second magnet 610 may implement vehicle gear change, vehicle speed change, turn indicator functionality, windshield wiper functionality, headlight functionality, and/or the like.

By sensing a position of the second magnet 610 without contact, the weight of an example smart shifter 100 is reduced and the durability is increased. In addition, example functionality indicated by different magnet placements can be easily reconfigured. Wear and tear of the example smart shifter 100 is reduced and reliability is increased.

### Conclusion

The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the appended claims below. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A smart shifter (100), comprising:
a spiral magnet (210);
a magneto-resistive sensor (260); and
an outer housing (120),
wherein the spiral magnet and the magneto-resistive sensor are spaced apart within the outer housing such that there is no contact between the spiral magnet and the magnetoresistive sensor,
wherein the spiral magnet is configured to rotate with the outer housing,
wherein the magneto-resistive sensor is configured to determine a rotational position of the spiral magnet, and
wherein a first function of the smart shifter is determined by the rotational position of the spiral magnet.

2. The smart shifter of claim 1, wherein the spiral magnet is fixed to the outer housing via one or more indexing plungers (230) and an indexing plunger plate (240).

3. The smart shifter of claim 1, wherein the magneto-resistive sensor is part of a printed circuit board assembly (220) configured to implement the first function of the smart shifter.

4. The smart shifter of claim 1, wherein the spiral magnet (210) comprises two magnetized pole layers arranged in a spiral pattern.

5. The smart shifter of claim 4, wherein the spiral magnet (210) defines an opening at a center axis defined by the spiral magnet.

6. The smart shifter of claim 5, wherein the magneto-resistive sensor (260) is positioned off-axis with respect to the center axis.

7. The smart shifter of claim 1, further comprising:
a second magnet (610); and
a three-dimensional integrated circuit (630),
wherein the second magnet and the three-dimensional integrated circuit are spaced apart such that there is no contact between the second magnet and the three-dimensional integrated circuit,
wherein the second magnet is configured to move across three dimensions,
wherein the three-dimensional integrated circuit is configured to determine an absolute position of the second magnet, and
wherein a second function of the smart shifter is determined by the absolute position of the second magnet.

8. The smart shifter of claim 7, wherein the three-dimensional integrated circuit (630)
determines the absolute position of the second magnet based on a flux density.

9. The smart shifter of claim 7, wherein the second magnet is placed at a first end of a shaft (150), wherein a second end of the shaft is coupled to an assembly comprising the spiral magnet and the magneto-resistive sensor.

10. The smart shifter of claim 9, further comprising a push switch (250), wherein the push switch allows movement of the shaft when engaged.

11. The smart shifter of claim 7, wherein the absolute position of the second magnet (610) describes a linear displacement of the second magnet and a rotary position of the second magnet.

12. The smart shifter of claim 7, wherein the first function of the smart shifter (100) or the second function of the smart shifter comprises at least one of vehicle gear, vehicle speed, vehicle windshield wiper function, headlight function, or turn indicator function.

13. A method, comprising:
determining, by a magneto-resistive sensor (260), a rotational position of a spiral magnet (210), wherein the spiral magnet and the magneto-resistive sensor are spaced apart within an outer housing (120) such that there is no contact between the spiral magnet (210) and the magneto-resistive sensor (260),
and wherein the spiral magnet is configured to rotate with the outer housing;
determining a first function of a smart shifter (100) based on the rotational position of the spiral magnet; and
implementing the first function of the smart shifter.

14. The method of claim 13, wherein the spiral magnet is fixed to the outer housing via one or more indexing plungers (230) and an indexing plunger plate (240).

15. The method of claim 13, wherein the magneto-resistive sensor is positioned on a printed circuit board assembly (220) configured to implement the first function of the smart shifter.

## Patentansprüche

1. Intelligenter Schalthebel (100), umfassend:
einen Spiralmagneten (210);
einen magnetoresistiven Sensor (260); und
ein Außengehäuse (120),
wobei der Spiralmagnet und der magnetoresistive Sensor innerhalb des Außengehäuses so voneinander beabstandet sind, dass zwischen dem Spiralmagneten und dem magnetoresistiven Sensor kein Kontakt besteht,
wobei der Spiralmagnet, dazu konfiguriert ist, sich mit dem Außengehäuse zu drehen,
wobei der magnetoresistive Sensor dazu konfiguriert ist, eine Drehposition des Spiralmagneten zu bestimmen, und
wobei eine erste Funktion des intelligenten Schalthebels durch die Drehposition des Spiralmagneten bestimmt wird.

2. Intelligenter Schalthebel nach Anspruch 1, wobei der Spiralmagnet an dem Außengehäuse über einen oder mehrere Rastbolzen (230) und eine Rastbolzenplatte (240) befestigt ist.

3. Intelligenter Schalthebel nach Anspruch 1, wobei der magnetoresistive Sensor Teil einer Leiterplattenbaugruppe (220) ist, die dazu konfiguriert ist, die erste Funktion des intelligenten Schalthebels zu implementieren.

4. Intelligenter Schalthebel nach Anspruch 1, wobei der Spiralmagnet (210) zwei magnetisierte Polschichten umfasst, die in einem Spiralmuster angeordnet sind.

5. Intelligenter Schalthebel nach Anspruch 4, wobei der Spiralmagnet (210) eine Öffnung in einer durch den Spiralmagneten definierten Mittelachse definiert.

6. Intelligenter Schalthebel nach Anspruch 5, wobei der magnetoresistive Sensor (260) in Bezug zu der Mittelachse außerhalb der Achse positioniert ist.

7. Intelligenter Schalthebel nach Anspruch 1, ferner umfassend:
einen zweiten Magneten (610); und
eine dreidimensionale integrierte Schaltung (630),
wobei der zweite Magnet und die dreidimensionale integrierte Schaltung so voneinander beabstandet sind, dass zwischen dem zweiten Magneten und der dreidimensionalen integrierten Schaltung kein Kontakt besteht,
wobei der zweite Magnet, dazu konfiguriert ist, sich über drei Dimensionen hinweg zu bewegen,
wobei die dreidimensionale integrierte Schaltung dazu konfiguriert ist, eine absolute Position des zweiten Magneten zu bestimmen, und
wobei eine zweite Funktion des intelligenten Schalthebels durch die absolute Position des zweiten Magneten bestimmt wird.

8. Intelligenter Schalthebel nach Anspruch 7, wobei die dreidimensionale integrierte Schaltung (630) die absolute Position des zweiten Magneten auf Basis einer Flussdichte bestimmt.

9. Intelligenter Schalthebel nach Anspruch 7, wobei der zweite Magnet an einem ersten Ende einer Welle (150) platziert ist,
wobei ein zweites Ende der Welle mit einer Baugruppe gekoppelt ist, die den Spiralmagneten und den magnetoresistiven Sensor umfasst.

10. Intelligenter Schalthebel nach Anspruch 9, ferner umfassend einen Druckschalter (250),
wobei der Druckschalter im eingerückten Zustand eine Bewegung der Welle erlaubt.

11. Intelligenter Schalthebel nach Anspruch 7, wobei die absolute Position des zweiten Magneten (610) eine lineare Verschiebung des zweiten Magneten und eine Drehposition des zweiten Magneten beschreibt.

12. Intelligenter Schalthebel nach Anspruch 7, wobei die erste Funktion des intelligenten Schalthebels (100) oder die zweite Funktion des intelligenten Schalthebels mindestens eines von Fahrzeuggang, Fahrzeuggeschwindigkeit, Fahrzeugwindschutzscheibenwischerfunktion, Scheinwerferfunktion oder Blinkerfunktion umfasst.

13. Verfahren, umfassend:
Bestimmen, durch einen magnetoresistiven Sensor (260), einer Drehposition eines Spiralmagneten (210), wobei der Spiralmagnet und der magnetoresistive Sensor innerhalb eines Außengehäuses (120) so voneinander beabstandet sind, dass zwischen dem Spiralmagneten (210) und dem magnetoresistiven Sensor (260) kein Kontakt besteht, und wobei der Spiralmagnet, dazu konfiguriert ist, sich mit dem Außengehäuse zu drehen;
Bestimmen einer ersten Funktion eines intelligenten Schalthebels (100) auf Basis der Drehposition des Spiralmagneten; und
Implementieren der ersten Funktion des intelligenten Schalthebels.

14. Verfahren nach Anspruch 13, wobei der Spiralmagnet an dem Außengehäuse über einen oder mehrere Rastbolzen (230) und eine Rastbolzenplatte (240) befestigt ist.

15. Verfahren nach Anspruch 13, wobei der magnetoresistive Sensor auf einer Leiterplattenbaugruppe (220) positioniert ist, die dazu konfiguriert ist, die erste Funktion des intelligenten Schalthebels zu implementieren.

## Revendications

1. Dispositif de décalage intelligent (100), comprenant :
un aimant en spirale (210) ;
un capteur magnétorésistif (260) ; et
un logement externe (120),
dans lequel l'aimant en spirale et le capteur magnétorésistif sont espacés à l'intérieur du logement externe de telle sorte qu'il n'existe pas de contact entre l'aimant en spirale et le capteur magnétorésistif,
dans lequel l'aimant en spirale est configuré pour tourner avec le logement externe,
dans lequel le capteur magnétorésistif est configuré pour déterminer une position de rotation de l'aimant en spirale, et
dans lequel une première fonction du dispositif de décalage intelligent est déterminée par la position de rotation de l'aimant en spirale.

2. Dispositif de décalage intelligent selon la revendication 1, dans lequel l'aimant en spirale est fixé au logement externe via un ou plusieurs doigts d'indexage (230) et une plaque de doigts d'indexage (240).

3. Dispositif de décalage intelligent selon la revendication 1, dans lequel le capteur magnétorésistif fait partie d'un ensemble carte de circuit imprimé (220) configuré pour mettre en œuvre la première fonction du dispositif de décalage intelligent.

4. Dispositif de décalage intelligent selon la revendication 1, dans lequel l'aimant en spirale (210) comprend deux couches polaires aimantées agencées selon un motif en spirale.

5. Dispositif de décalage intelligent selon la revendication 4, dans lequel l'aimant en spirale (210) définit une ouverture au niveau d'un axe central défini par l'aimant en spirale.

6. Dispositif de décalage intelligent selon la revendication 5, dans lequel le capteur magnétorésistif (260) est positionné hors de l'axe par rapport à l'axe central.

7. Dispositif de décalage intelligent selon la revendication 1, comprenant en outre :
un deuxième aimant (610) ; et
un circuit intégré tridimensionnel (630),
dans lequel le deuxième aimant et le circuit intégré tridimensionnel sont espacés de telle sorte qu'il n'existe pas de contact entre le deuxième aimant et le circuit intégré tridimensionnel,
dans lequel le deuxième aimant est configuré pour se déplacer sur trois dimensions,
dans lequel le circuit intégré tridimensionnel est configuré pour déterminer une position absolue du deuxième aimant, et
dans lequel une deuxième fonction du dispositif de décalage intelligent est déterminée par la position absolue du deuxième aimant.

8. Dispositif de décalage intelligent selon la revendication 7, dans lequel le circuit intégré tridimensionnel (630) détermine la position absolue du deuxième aimant sur la base d'une densité de flux.

9. Dispositif de décalage intelligent selon la revendication 7, dans lequel le deuxième aimant est placé au niveau d'une première extrémité d'un arbre (150),
dans lequel une deuxième extrémité de l'arbre est couplée à un ensemble comprenant l'aimant en spirale et le capteur magnétorésistif.

10. Dispositif de décalage intelligent selon la revendication 9, comprenant en outre un bouton-poussoir (250),
dans lequel le bouton-poussoir permet le mouvement de l'arbre lorsqu'il est en prise.

11. Dispositif de décalage intelligent selon la revendication 7, dans lequel la position absolue du deuxième aimant (610) décrit un déplacement linéaire du deuxième aimant et une position rotative du deuxième aimant.

12. Dispositif de décalage intelligent selon la revendication 7, dans lequel la première fonction du dispositif de décalage intelligent (100) ou la deuxième fonction du dispositif de décalage intelligent comprend au moins l'un parmi rapport de véhicule, vitesse de véhicule, fonction d'essuie-glace de véhicule, fonction phare ou fonction clignotant.

13. Procédé, comprenant :
la détermination, par un capteur magnétorésistif (260), d'une position de rotation d'un aimant en spirale (210), dans lequel l'aimant en spirale et le capteur magnétorésistif sont espacés à l'intérieur d'un logement externe (120) de sorte qu'il n'existe pas de contact entre l'aimant en spirale (210) et le capteur magnétorésistif (260), et dans lequel l'aimant en spirale est configuré pour tourner avec le logement externe ;
la détermination d'une première fonction d'un dispositif de décalage intelligent (100) sur la base de la position de rotation de l'aimant en spirale ; et
la mise en œuvre de la première fonction du dispositif de décalage intelligent.

14. Procédé selon la revendication 13, dans lequel l'aimant en spirale est fixé au logement externe via un ou plusieurs doigts d'indexage (230) et une plaque de doigts d'indexage (240).

15. Procédé selon la revendication 13, dans lequel le capteur magnétorésistif est positionné sur un ensemble carte de circuit imprimé (220) configuré pour mettre en œuvre la première fonction du dispositif de décalage intelligent.
